# EUROPEAN PATENT APPLICATION

(11) **EP 4 741 806 A1**
(43) Date of publication of application: **13.05.2026**
(21) Application number: 24211229.0
(22) Date of filing: 06.11.2024
(51) Int. Cl.: G01N 21/65, G01N 21/47, G01J 3/44

(54) **PROBE HEAD, RAMAN SPECTROSCOPY INSTRUMENT COMPRISING THE PROBE HEAD, AND METHOD OF PERFORMING OPTICAL MEASUREMENTS**

(71) Applicant: Mettler-Toledo GmbH, 8606 Greifensee (CH)
(72) Inventor: Bergström, Pär, 8706 Meilen (CH); Raumer, Michael, 71083 Herrenberg (DE); Schwab, Christian, 75173 Pforzheim (DE)
(74) Representative: Mettler-Toledo

(57) **Abstract**

A probe head (10) suitable for Raman spectroscopy comprises an optical pathway (110) along which it is intended that light is emitted for illuminating a sample and light returns from the sample. The probe head further comprises an internal reference target selector (25) which allows to selectively bring a reference target (253) into said optical pathway, in which case the returning light, and thus the measurement signal, originate form the reference target, and to selectively provide free passage for the light to and from the sample, in which case the returning light, and thus the measurement signal, originate form the sample. The reference target has a known Raman spectrum. Measurement values from the reference target thus enable calibration of the Raman spectroscopy measurements. The internal reference target selector enables calibration without removing the probe head from a measurement setup.

## Description

### Technical Field

The herein disclosed subject matter relates to a probe head, a probe, a Raman spectroscopy instrument comprising the probe head, and to a method of performing optical measurements as set forth in the appended claims.

### Background Art

Raman scattering spectroscopy is a powerful method for material analysis. In brief Raman scattering describes the effect that some of the light illuminating a material may be inelastically scattered by the material, thus either exciting atoms and/or molecules, so-called Stokes Raman scattering, or receiving energy from atoms and/or molecules, so-called Anti-Stokes Raman scattering. In the first case, energy is transferred from a light quantum to the matter, i.e., the light loses energy, i.e., the scattered light has a lower frequency or a larger wavelength that the incoming light. In the latter case, energy is transferred to a light quantum, i.e., the light gains energy, i.e., the scattered light has a higher frequency or a smaller wavelength than the incoming light.

In the art of Raman spectroscopy, the energy gain or energy loss of the light quanta, or photons, i.e., the so-called Raman shift, is expressed in terms of a wave number shift from an excitation light wavelength, and measured in the dimension of 1/cm. In brief, the light inelastically scattered by a material upon excitation of the material by light of a specific excitation wavelength has a characteristic Raman spectrum of intensity versus Raman shift. Hence, a spectrum of light scattered from a sample may be measured, analysed, and be compared to a database of known Raman spectra for specific materials to determine said materials in the sample. More generally, it may be said that Raman scattering is based upon illuminating a sample with monochromatic or narrow band excitation light and analysing a spectrum of scattered light comprising a spectrum which includes wavelengths different from the wavelengths comprised in the excitation light.

The intensity of the Raman scattered light is lower than the intensity of the excitation light by several orders of magnitude. Moreover, it is crucial to correctly and accurately assign a measured intensity within a spectrum to the correct wavelength. In particular, when Raman spectroscopy is applied in long-term measurements, it may be desirable to calibrate the measurement setup in intervals during the measurement period. This calibration can preferably be a wave number calibration of the Raman shift and/or a calibration of the spectral response of the instrument, such as a Raman spectrometer. In addition, it was observed that the intensity of the excitation light, i.e. the light with which the sample is illuminated, can change over time, causing intensity changed in the Raman scattered light intensity which are unrelated to the measured material. Again, this effect is in particular relevant in long-term measurements and in instruments where light source and sample volume -i.e. the location of the material to be measured- are separated, spatially and/or by multiple optical components. It may therefore be desirable to provide means to detect and -if needed- correct or at least consider such excitation light intensity fluctuations during the measurement period.

US 6,897,951 B1 suggests an end cap which includes a calibration material, i.e., a material having a known Raman spectrum, on an inner side thereof. The end cap is intended to be attached to a distal end of a probe to generate and detect a known Raman spectrum. This allows to calibrate the instrument and/or the spectral analysis. However, it will be appreciated that a probe head can in certain applications not remain installed in the measurement setup during the calibration procedure when the device suggested in US 6,897,951 B1 is used. Calibration may require removal of a probe head from a measurement setup, which has at least two drawbacks: On the one hand, it requires manual operation, requires removal and rearrangement of the probe head, which in turn may result in misalignment. On the other hand, in the case of a measurement setup where the sample is arranged in a containment in which the probe is partially inserted, retracting the probe from said containment implies that said containment is opened and that there is therefore the risk that the sample is contaminated with material from the environment and vice versa. Besides the risk of contaminations, it might be necessary to interrupt a monitored process taking place in said containment. US 2020/348173 A1 suggests a standard reference material interface for a Raman probe which includes a locator including a housing having a first end and a second end. The first end includes an attachment portion configured to mate with an attachment portion of the Raman probe. The locator defines a central axis that intersects the first end and the second end. The standard reference material interface also includes a hermetically sealed standard reference material enclosure positioned at the second end of the housing and enclosing a standard reference material. An optical port is positioned within the housing between the Raman probe and the standard reference material relative to the central axis. The optical port includes a window. The US 6,621,574 B1 relates to an accessory for incorporation into Raman and other spectroscopic instruments for combining shuttering and spectroscopic calibration functions. The accessory is comprised of an assembly with at least two positions that may be inserted into the light path, one position allowing light to be directed to and from the sample, and another position containing a reference standard that blocks the beam and provides a shuttering function. When the light strikes the reference standard, a reference spectrum is produced that may be used to calibrate the spectrograph. The EP2416697A1 relates to an optical probe applied for measuring light signals in vivo. The disclosed optical probe comprises a first optical fiber guiding incoming light, a lens focusing incoming light towards a sample and collecting altered light from said sample, a second optical fiber guiding altered light, a light logging device measuring intensity fluctuations in said incoming light, and is characterized in that said light logging device is positioned after said first optical fiber, whereby said light logging device receives a part of said incoming light from said first fiber.

There is a desire for methods and devices which allow the calibration of a Raman spectroscopy instrument and/or analysis method, or allow reference measurements, respectively, while a probe head of the spectroscopy instrument remains installed in a measurement setup, or, in other aspects, do not require to remove the probe head from and rearrange the probe head at a measurement setup, or, in still other aspects to manipulate the probe head. In still further aspects, automated performance of calibration or reference measurements may be desired. In particular, there is the desire to provide a probe head which allows the user or an instrument to which the probe head is connected to obtain data useable for both, the perform a wave number calibration and/or a calibration of the spectral response of a spectrometer in addition to the correction or consideration of intensity variations of the excitation light over time. Most particularly, there is a desire to provide an instrument suitable for long-term measurements during which the probe remains in constant contact with the sample to be measured. This could be, for example, the continuous monitoring of a bioprocess with an in-line or on-line probe.

### Summary of invention

In one aspect, the subject matter initially mentioned shall be suggested. In more specific aspects, the herein disclosed subject matter shall overcome at least some of the limitations of the art. In more specific aspects, it may be desired to enable automated performance of calibration, or reference, measurements. In other specific aspects, it may be desired that a probe can remain installed in place while the calibration measurement is performed.

It is noted, in this aspect, that calibration means taking a comparison measurement with the instrument with a known reference standard and comparing the measured data with the expected data, which allows a subsequent correction of data measured from unknown materials. Calibration does not include adjustment of the instrument, while, of course, adjustment of the instrument, which may include corrections of, for instance, evaluation software, to show "true" results is not excluded, however is not part of the calibration itself.

At least some of the objects set out above are achieved by the subject matter of at least some of the claims.

The invention as herein claimed is defined by the subject matter set forth in the appended claims.

Accordingly, disclosed is, in at least a first aspect of the disclosure, a probe head comprising a sensing light optical path extending between a head aperture of the probe head and an optical path junction.

The optical path junction is configured to receive light from an emitter optical path and to guide light traveling along the emitter optical path and to the optical path junction at least partially along the sensing light optical path into a distal direction and towards the head aperture.

The optical path junction is further configured to guide collimated light traveling along the sensing light optical path from the head aperture and to the optical path junction at least partially along a receiver optical path.

The probe head as herein suggested further comprises a reference target selector. The reference target selector comprises at least one reference target and is configured to selectively place one of the at least one reference target into the sensing light optical path and selectively provide free, unhindered optical transmission between the optical path junction and the head aperture.

The probe head as herein suggested further comprises further a reference sensor. The probe head is configured such that part of the light travelling along the emitter optical path is guided onto said reference sensor.

A "head aperture" of the probe head is to be understood as an optical aperture, providing optical access into and out of the probe head, while it may be fluid-sealed or be provided with a protection against soiling or be an opening. The head aperture may generally be intended to provide optical access to a sample respectively to the optical path junction.

The term "optical path" shall be construed broadly, so as to encompass an optical path defined by mirrors, lenses, fiber couplers and so forth, but to also include optical fibers and/or other light guides.

By the above described optical paths, it is intended that light intended to illuminate a sample, which is arranged distal from the head aperture of the probe head, such as the excitation light for Raman spectroscopy, travels along the emitter optical path and is, at the optical path junction, at least partially guided in a distal direction towards the sample. It is further intended that light scattered backward from the sample, which may include Raman scattered light, travels in a proximal direction along the sensing light optical path and is, at the optical path junction, at least partially directed along a receiver optical path, from where it may, for instance, be directed to a spectrometer.

The reference target selector thus allows in one configuration to direct an illumination light, e.g., excitation light for Raman analysis, from the optical path junction at least partially to a sample which is placed distal from the head aperture of the probe head or distal form the distal aperture of a probe and receive light reflected and/or backscattered from the sample and guides said reflected and/or backscattered light, e.g., Raman scattered light, to the optical path junction, and further said backscattered light may at least partially be guided along the receiver optical path, e.g., to a spectrometer. In a different configuration, the reference target selector may place a reference target, e.g., a target consisting of a material having a known Raman scattering spectrum, into the sensing light optical path distal from the optical path junction. The reference target may thus be illuminated, or excited, respectively, by illumination light, and backscattered light may be guided, at least partially, for instance to a spectrometer along the receiver optical path. Values measured by the spectrometer may then be compared with the known Raman shift spectral lines and/or the known relative intensities at certain Raman shifts in order to obtain calibration or reference data for the Raman spectroscopy measurements to be able to perform a wave number calibration of the Raman shift and/or a calibration of the spectral response of the instrument.

The reference sensor receives part of the light travelling along the emitter optical path and can thereby measure an intensity respectively intensity changes of the emitter light. As the reference sensor is arranged in the probe head and this measurement includes all losses or intensity changes which might be cause by the transmission of the excitation light into probe head. It is the configuration of the probe head, and not the reference target selector, which guides part of the light travelling along the emitter optical path onto said reference sensor. Therefore, the reference sensor can monitor the intensity or intensity changes independent of the configuration of the reference target selector. Consequently, the sensor head can provide accurate information about the intensity of the excitation light during both, the measurement of the reference target as well as the measurement of the sample. This information is preferably used to normalize the calibration measurements as well as the sample measurements to a common, nominal intensity by applying a mathematical correction to the detected intensity values. Alternatively, the information can be used to discard calibration measurements or measurements if the detected intensity is outside of a predefined range, or it can be used to indicate an increased measurement uncertainty or to issue a warning. In addition, a warning can be issues if the detected intensity is outside of an interval indicating a working condition of the instrument, i.e. the combination of the probe head, preferably a probe, and an emitter/analyzer unit. For example, a broken connection between probe head and the emitter/analyzer unit may result in a very low intensity of the excitation light.

In that the reference target selector places the reference target in the sensing light optical path between the optical path junction and the head aperture or distal aperture, reference or calibration measurements may be performed while the probe head is installed to a measurement setup. The probe head does not need to be removed from a measurement setup for calibration or reference measurements. The reference target is placed in the same optical path which is used for measurement. Thus, the influence of all optical components, apart from components which may be provided in connection with the head aperture and the distal aperture of the probe, are accounted for when performing a reference or calibration measurement and the same holds true for the intensity monitoring done by the reference sensor. Illumination of a sample and of a reference target is identical. The reference target selector may be motorized or otherwise servo driven. Operation of the reference target selector may be fully automated such that manual action may be completely dispensed with. In other embodiments however, an operator might drive the reference target selector by hand, for example by using a slider or a button on the outside of the probe head which is attached to a carrier comprising the reference target located on the inside of the probe head, whereby said slider or button moves the reference target into and out of the sensing light path.

The reference target selector may comprise a completely open aperture or a transparent aperture which may be placed in the sensing light optical path to provide the free optical transmission between the optical path junction and the head aperture. In other embodiments, the reference target selector may completely be moved out of the sensing light optical path to provide unhindered optical access to the sample when performing non-reference measurements.

In embodiments, two or more reference targets may be provided in the reference target selector, which may be selectively placed in the sensing light optical path. The two or more reference targets may have different properties, such as different spectral maxima. It may moreover be provided that at least one of the reference targets may consist of a material having relatively sharp defined spectral lines of the Raman spectrum, so as to perform a wave number calibration of the Raman shift, while at least one other reference target may consist of a material having at least one relatively broad spectral line, which allows calibration of the spectral response of a spectrometer.

The probe may comprise a probe head and a tube inside which the sensing light optical path extends. The tube comprises a proximal end and a distal aperture. In the embodiment of a probe, the tube is mounted with its proximal end to the probe head, such that the mounted tube surrounds the head aperture.

A "distal aperture" of the tube is to be understood as an optical aperture, providing optical access into and out of the tube, while it may be fluid-sealed or be provided with a protection against soiling or be an opening. The distal aperture may generally be intended to provide optical access to a sample respectively to the optical path junction via the proximal end of the tube and the head aperture when the tube is mounted to the probe head.

The tube may for instance be intended to be mounted to a measurement setup and may extend into a containment, such as a reactor or a fluid line or another containment, and may remain installed also when reference or calibration measurements are performed. The distal aperture may be considered a distal aperture of the tube. The tube may comprise a flow cell or a sample cell where the sample to be measured can be arranged in or can flow through. In the case of a flow cell, the tube comprises two line connectors onto which a fluid line conducting a fluid sample can be mounted. Preferably, tubes intended to extend into a containment or comprising a flow cell or a sample cell comprise a distal aperture which is fluid-sealed to prevent the sample from entering the tube in a region proximal of the aperture optic. The fluid-seal can for example be archived by the use of a suitably sealed window or, if present, by mounting the most distal element of an aperture optic such that it creates a fluid-seal. The tube may also comprise a cuvette holder which allows the insertion of a sample arranged in a cuvette in distal part of the tube. In these embodiments, the distal aperture is arranged adjacent and proximal of the sample volume.

Preferably, the tube comprises an aperture optic. An aperture optic is preferably arranged in the tube and in the sensing light optical path. In a preferred embodiment, the aperture optic is arranged adjacent the distal aperture. The aperture optic is adapted to focus light traveling through the tube in a proximal- distal direction and to collimate light entering the tube through the distal aperture and traveling in a distal-proximal direction. The aperture optic may be arranged in the sensing light optical path and in particular adjacent the distal aperture. The aperture optic may generally comprise a collimating lens system, which in turn comprises at least one collimating lens. The term "lens system" is intended to be construed broadly to also encompass a single lens. The aperture optic may serve to collimate the illumination light to a sample and to collect backscattered light over a certain spatial angle into the sensing light optical path, which is found useful in case the intensity of the backscattered light intended to be sensed is comparatively low, as is the case with Raman scattering signals.

Further effects and advantages of the disclosed subject matter, whether explicitly mentioned or not, will become apparent in view of the disclosure provided below.

It is noted that within the framework of the present disclosure the use of the indefinite article "a" or "an" does in no way stipulate a singularity nor does it exclude the presence of a multitude of the named member or feature. It is thus to be read in the sense of "at least one" or "one or a multitude of'.

In embodiments, the optical path junction may comprise at least one of a beam splitter and a semi-transparent mirror. Preferably the optical path junction is realized by a dichroic mirror. The emitter optical path adjacent the optical path junction and the receiver optical path adjacent the optical path junction may in particular in said embodiments be non-parallel.

By use of a beam splitter or a semi-transparent mirror, for instance, light travelling along the emitter optical path towards the said beam splitter or mirror is only partially guided in a distal direction along the sensing light optical path at the optical path junction, while light travelling in a proximal direction along the sensing light optical path is only partially guided to the receiver optical path.

In embodiments, at least one optical component of the probe head is configured to transmit light travelling along the emitter optical path and towards the optical path junction and/or travelling distally along the sensing light optical path partially to the reference sensor. An intensity measured by the reference sensor may be used to continuously correct the intensities of the measured signal from the sample, in particular the intensities of the Raman spectral lines, to account for a fluctuating instantaneous illumination intensity.

In embodiments, the light traveling along the emitter optical path adjacent the optical path junction is partially deflected at optical path junction to continue traveling along the sensing light optical path and partially transmits the optical path junction to be guided onto the reference sensor along a reference optical path. In a particular embodiment, the light transmitting the optical path junction is, on the reference optical path, guided by a reference mirror onto the reference sensor.

Said embodiment separates the reference optical path clearly from the receiver optical path and avoids that scattered reference light enters the receiver optical path. Such a separation can be improved by arranging not directly the reference senor behind the optical path junction but rather a reference mirror which reflects the reference light onto the reference sensor.

In embodiments, the light travelling along the emitter optical path towards the beam splitter or mirror is partially reflected to follow the sensing light optical path in a distal direction and partially transmits the beam splitter or mirror from where it can be guided onto the reference sensor. Light travelling in a proximal direction towards the beam splitter or mirror is partially reflected to proceed along the emitter optical path and partially transmits the beam splitter or mirror to follow the receiver optical path. In the case of a dichroic mirror the wavelength dependency of its reflectance can be used such that the majority of the excitation light is reflected while the majority of the Raman scattered light is transmitted. It was found that the small amount of excitation light transmitting such a dichroic mirror is sufficient for the purpose of monitoring the excitation light intensity.

In embodiments, the reference sensor can observe light which is scattered at an optical component arranged in the emitter optical path, or which is reflected on an optical component arranged in the emitter optical path which is mostly transmitted by the excitation light, such as another beamsplitter, or which transmits an optical component arranged in the emitter optical path which mostly reflects the excitation light, such as another mirror. As the excitation light follows the emitter optical path as a collimated light bundle, it is also possible to arrange a small reflective or scattering target in this optical path, which is passed by the majority of the light bundle, while a fraction is scatter or reflected such that it can be observed by the reference sensor.

In embodiments, the head aperture, the optical path junction, and the receiver optical path are arranged on a straight line, such that collimated light traveling along the sensing light optical path towards the optical path junction can transmit said optical path junction without deflection to enter the receiver optical path. Preferably, the probe head comprises in addition a mirror which is provided in the emitter optical path to deflect light traveling along the emitter optical path on the optical path junction.

In these embodiments, the light traveling along the sensing light optical path towards the optical path junction - preferably the Raman scattered light- can transmit through the optical path junction to continue along the receiver optical path. This creates a more robust system as it lowers the risk that a small misalignment at the optical path junction reduces the already small intensity even further.

In non-limiting embodiments, the probe head comprises at least one of an emitter port or a receiver port configured to receive an optical fiber.

The emitter port is arranged and configured such that the emitter optical path extend through this emitter port. A collimating optic is arranged in the emitter optical path such that divergent light emitted from an emitter optical fiber may be collimated to the emitter optical path. The emitter optical fibre is an optical fiber connected at the emitter port. The receiver port is arranged and configured such that the receiver optical path extend through the receiver port. A coupling optic is arranged in the receiver optical path such that light travelling along the receiver optical path may be coupled into a receiver optical fiber. The receiver optical fibre is an optical fiber connected at the receiver port.

In embodiments of the probe head, it comprises an emitter port, a receiver port and the reference sensor. The emitter port, the receiver port and the reference sensor are arranged such that at least the section of the emitter optical path adjacent the emitter port, the section of the receiver optical path adjacent the receiver port and the section of the reference optical path adjacent the reference senor (16) are parallel to each other. In a preferred embodiment, said sections of the optical paths are at least partially separated from each other by opaque walls.

Arranging said sections parallel to each other allows on the one hand to arrange the emitter port, the reference port and the reference senor in one plane which in turn allows to combine both ports in a single socket-plug connection if desired. In addition, a PCB or a board carrying the reference sensor and electronics needed for an automated reference target selector can be arranged in parallel to the plane of the ports. It is also possible that the ports are mounted to said PCB or to said board. Separating the different paths by opaque walls creates on the one hand a baffle-like function of avoiding the entry of stray light from one of the optical paths to the others and provides one the other hand a support for, for example said board or PCB or other components.

Preferably, the probe head comprises a connector to connect an emitter optical fibre, a connector to connect a receiver optical fibre, a connector to transfer data via electric or optical signals and a connector to transfer electric power. Most preferably, all of these connectors are combined in a single socket or a single plug.

In other non-limiting embodiments, the probe head may comprise at least two optical fibers, wherein at least one collimating optic is arranged in each of the emitter optical path and the receiver optical path, wherein an end of each of at least two of the at least two optical fibers is placed in the focus of a respective collimating optic, wherein the optical fiber ends and the optical path junction are provided on different sides of the collimating optic. Divergent light emitted from an optical fiber arranged in the emitter optical path is collimated and light travelling along the receiver optical path is focussed and collimated into the optical fiber arranged in the receiver optical path.

Further disclosed is a Raman spectroscopy instrument comprising a probe head or a probe of any kind set forth above, a light source and a spectrometer. The emitter optical path is configured for guiding light from the light source to the optical path junction and the optical path junction is arranged and configured to guide said light at least partially along the sensing light optical path into a distal direction, and the optical path junction is arranged and configured to guide light travelling in a proximal direction along the sensing light optical path at least partially along the receiver optical path and to the spectrometer.

The Raman spectroscopy instrument comprises further the reference sensor arranged on the probe head which is an emitter intensity reference sensor. The emitter intensity sensor is arranged and configured to measure a light intensity indicative of instantaneous intensity of the light emitted by the light source.

In embodiments, the Raman spectroscopy instrument further comprises a fiber optic connector connecting the spectrometer with the probe head. The fiber optic connector comprising at least two optical fibres, a data transmission channel and preferably means for electrical power transmission. Such a fiber optic connector allows to arrange the probe head at some distance from the spectrometer itself. The reference sensor in the probe head allows to consider and to monitor the potential losses due to the connection and the data transmission channel can transmit the results to the spectrometer where they can be used to normalize or correct the measured intensities and/or to issue a warning and/or to cause a calibration measurement: For example if a change in the monitored excitation intensity indicates that the quality of the connection between spectrometer and probe head has changed, a calibration measurement can be triggered to ensure that potentially similar quality changes in the transmission from the probe head to the spectrometer can be corrected, too. Such a calibration measurement includes the step of moving a suitable reference target with the reference target selector in the sensing light optical path. Preferably the power and the commands for this action are provided via the data transmission channel and the electrical power transmission line provided in the fiber optic connector.

In another aspect, a method for performing optical measurements is suggested. The method comprises a basic method comprising the following steps:
- Emitting light and at least partially guiding said light into a proximal-distal direction of a sensing light optical pathway.
- Monitoring the intensity of the light guided into the proximal-distal direction of the sensing light optical pathway. This is done by measuring a reference intensity which is proportional to the intensity of the emitted light.
- At least partially guiding light returning along the sensing light optical pathway in a distal-proximal direction to at least one sensor.
- Measuring at least one intensity of the returning light.
- Correcting the measured intensity of the returning light by taking the reference intensity into account which was monitored in the time frame of relevance for said measured intensity, resulting in a corrected intensity.

The method for performing optical measurements comprises further the following steps:
- performing the basic method in at least one measurement step in which the light is directed in the proximal-distal direction to a sample such that the light returning in the distal-proximal direction originates from the sample.
- performing the basic method in at least one reference step in which a reference target is placed in the sensing light optical pathway proximal from the sample such that the light returning along the sensing light optical pathway in the distal-proximal direction originates from the reference target.

It is understood that the direction and spatial orientation of the sensing light optical pathway remains unchanged between the measurement step and the reference step. The at least one corrected intensity determined during the at least one reference step is used in evaluating data from the at least one corrected intensity determined during at least one of the at least one measurement step. It may, in other words, be said that the data obtained during the reference step are calibration data for a measurement system. By comparing the measured data to the known values for the reference target the optical measurements may be calibrated.

In said method the reference intensity which is proportional to the intensity of the emitted light, and more in particular proportional to the intensity of the light guided in a distal direction along the sensing light optical pathway, is measured. The reference intensity may be continuously measured. Measured intensities from a sample or a reference target may be normalized to the instantaneously measured reference intensity. Fluctuations of the intensity of the emitted light may thus be taken into account and be compensated. For instance, the light emitted from a light source may be spilt into one fraction which is guided in a distal direction along the sensing light optical pathway, while another fraction is guided to a reference sensor.

The at least one sensor to which the returning light is at least partially directed may be part of a spectrometer. It may thus be said that the light returning along the sensing light optical pathway in a distal-proximal direction is at least partially guided to a spectrometer.

The light returning from the reference target, i.e., during the reference step, will, in particular, have a known spectral distribution such as, for instance, a known Raman spectrum. The known Raman spectrum may be used as a reference, or to calibrate, the magnitude of a measured intensity and the wavelength at which the light is sensed.

The skilled person will readily appreciate that the herein suggested method may, in particular, be performed in applying a probe head and/or instrument of any kind outlined above, and the above-described devices, or specific embodiments thereof, are particularly suited to perform the herein suggested methods.

In more specific, non-limiting, embodiments the light emitted is monochromatc light or narrow band light having a full width at half maximum of 10 nm or less. In other aspects, the light emitted may have a full width at half maximum of 1% or less of a wavelength of maximum intensity of the emitted light. In contrast, the at least one intensity of the returning light measured by the at least one sensor comprises a spectral intensity distribution of the returning light in a continuous spectral range covering a spectral range corresponding to at least 10% of the wavelength of the monochromatic emitted light or of a wavelength of maximum intensity of the narrow band emitted light. It may be the case that a spectrometer measures the spectral intensity distribution in a spectral range covering at least 10% of the wavelength of the monochromatic emitted light or of a wavelength of maximum intensity of the narrow band emitted light.

Said method is essentially characterized in that monochromatic light or narrow bandwidth light is sent to a sample, while the light returning from the sample is measured over a significantly larger spectral range, including wavelengths different from the wavelengths comprised in the emitted light, i.e., the light used to illuminate the sample. The measurement of the returning light is spectrally resolved, such that the intensity distribution over the measured spectral range is measured. Illuminating a sample with narrow band light and measuring a spectral intensity distribution over a broader spectral range including wavelengths different from those of the illuminating light essentially characterizes Raman spectroscopy.

The spectral range covered by the measurement may be located adjacent to or distant from the wavelengths included in the emitted light. The spectral range covered by the measurement may include wavelengths smaller than the wavelength(s) of the illumination light, larger than the wavelength(s) of the illumination light, or both.

In other aspects, the emitted light is monochromatic light or narrow band light having a full width at half maximum of 10 nm or less. The measured intensities may include a Raman spectrum including at least one of Stokes Raman scattering and/or Anti-Stokes Raman scattering.

The sensing light optical pathway may be generally directed towards a sample. It is noted that, even if a reference target is placed in the sensing light optical pathway, for instance between an optical path junction and a sample, the sensing light optical pathway may still be directed towards the sample, irrespective of whether any illumination light reaches the sample or not. The optical measurements may be performed over a measurement period, which may, for non-limiting instances, comprise minutes, hours, or days. The method may comprise performing at least two measurement steps during the measurement period, wherein at least one reference step is performed between the at least two measurement steps and wherein the position of the sensing light optical pathway in relation to the sample is maintained unchanged during the entire measurement period. Likewise, the orientation or direction of the sensing light optical pathway in relation to the sample is maintained unchanged during the entire measurement period. That is, the optical measurement setup remains physically unchanged during the entire extended measurement period, apart from the fact that a reference target may be placed into and removed from the sensing light optical pathway. In that the measurement setup remains unchanged, reproducibility of the measurement is enhanced and any need for manipulation of the measurement setup is eliminated.

Multiple reference steps may be performed during a measurement period. In other embodiments, one reference step may be performed before and after a measurement step. In case two or more reference steps are performed, the calibration data obtained in two consecutive reference steps may be interpolated for correcting measurement data obtained at any given time during a measurement step between the consecutive reference steps. Interpolation may be linear or non-linear. The skilled person is readily aware of suitable interpolation methods.

For the sake of completeness, it is noted that any measurement and/or reference step may include multiple readings taken during a certain period. Data from the readings may be averaged or be used as time-resolved data, as appropriate and familiar to a person having skill in the art.

The sensing light optical pathway may comprise a sensing light optical path of a probe head, wherein the position and orientation of the probe head in relation to the sample is maintained unchanged during the entire period. In other words, a probe head stays in place and remains mounted to the measurement setup during the entire measurement period and also when reference steps are performed, i.e., calibration readings are taken, or calibration measurements performed, respectively.

The sample may be provided within a containment, such as, while not limited to, a vessel, a bioreactor, a container or line. In some embodiments, a tube of the probe inside which the sensing light optical path extends reaches into the interior of the containment through a port. The tube of the probe remains fixedly installed through the port during the measurement period. In some embodiments, the tube itself forms part of the containment and comprises ports onto which other parts of the containment remain fixedly installed to during the measurement period. More in particular, the probe remains fixedly installed to the containment during the entire measurement period. Contamination of the sample by removing and re-installing the tube of the probe head is thus prevented.

It is understood that the features and embodiments disclosed above may be combined with each other. It will further be appreciated that further embodiments are conceivable within the scope of the present disclosure and the claimed subject matter which are obvious and apparent to the skilled person by virtue of the present disclosure.

### Brief description of drawings

The subject matter of the present disclosure is now to be explained in more detail by means of selected exemplary embodiments shown in the accompanying drawings. The figures show
- Fig. 1: an example of a Raman spectrum, with an arbitrary measure for the intensity of the Raman scattered light drawn versus the Raman shift in 1/cm;
- Fig. 2: an exemplary embodiment of a probe head in accordance with the herein disclosed subject matter;
- Fig. 3: details of the optical setup of an exemplary probe head in accordance with the herein disclosed subject matter;
- Fig. 4: details of the optical setup of the exemplary probe head of figures 2 and 3 with the reference target selector in a different position;
- Fig. 5: a Raman spectroscopy instrument incorporating the probe head outlined in connection with figures 2 through 4; and
- Fig. 6a, 6b: measurement setups including a probe head outlined in connection with figures 2 through 4.

It is understood that the drawings may be highly schematic, and details not required for instruction purposes may have been omitted for the ease of understanding and depiction. It is further understood that the drawings show only selected, illustrative embodiments, and embodiments not shown may still be well within the scope of the herein disclosed and/or claimed subject matter.

### Description of embodiments

As outlined above, Raman spectroscopy is an analysis of inelastically scattering of light by a material. While most of the light scattered by a material is scattered with the same wavelength as the incoming light, some light quanta may either excite atoms or molecules of the material without being completely absorbed, and thus lose energy, while others might receive energy from the matter. Accordingly, the frequency and thus the wavelength of the scattered light changes. In Raman spectroscopy, the change of frequency is expressed as a wave number Raman shift, in the unit 1/cm, which is proportional to the energy loss or gain. According to the common convention, energy loss of the scattered light, so-called Stokes Raman scattering, is denoted by a positive wave number Raman shift, while energy gain of the scattered light, so-called Anti-Stokes Raman scattering, is denoted by a negative wave number Raman shift. Light scattered by Stokes Raman scattering has a larger wavelength than the incident or exciting light, while light scattered by Anti-Stokes Raman scattering has a shorter wavelength than the incident or exciting light. Wavelengths changes determined while performing spectroscopy of the scattered light may be converted into wave number shifts.

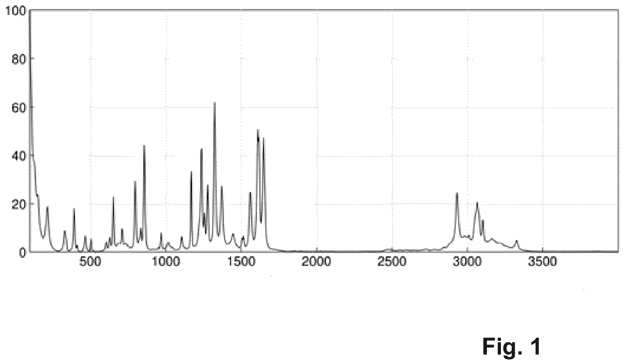

Figure 1 shows an example of a Stokes Raman spectrum. The vertical axis shows a measure of the intensity in an arbitrary unit, while the horizontal axis shows the Raman shift in 1/cm. The obtained Raman spectra are characteristic for the material from which the Raman scattered light is received. The Raman spectrum can be correlated to known spectra stored in a database, and the material or the materials from which the Raman scattering originates can thus be determined. The exemplarily shown Raman spectrum identifies Acetaminophen. At wave number 0, the intensity of the elastically scattered light is shown, which is higher than the intensity of any spectrally resolved intensity of the Raman spectrum. In consideration of the relatively low intensities of the Raman scattered light, the skilled person will appreciate the importance of a precise calibration of the measurement, both in term of the wavelength, or wave number shift, of scattered light having a certain intensity, and the intensity itself. The Raman spectrum may for instance be determined by splitting the Raman scattered light using a monochromator grating and quantitatively capturing the resulting spectrum in a CCD array. It is important to know which pixel of a CCD array is illuminated with light of which specific wavelength, corresponding to a specific Raman or wavenumber shift, and a relative pixel sensitivity of each pixel of the CCD array at the wavelength captured by said pixel in relation to the pixel sensitivity of other pixels at the wavelengths captured by those pixels. Measured intensities might be affected by, for instance, a movement of a probe head, bending of fibers, temperature changes and so forth. Regular calibration might be crucial in particular when performing Raman measurements over an extended period, such as when Raman spectroscopy is applied in monitoring of processes. It may be found desirable if a probe remains in place while a calibration measurement is performed, such as to, on the one hand, avoid distorting the measurements by manipulating a probe head or Raman spectroscopy instrumentation, but also to avoid contamination of processes to be observed by removing and re-installing a probe.

Moreover, in long-term continuous measurements, for instance for process monitoring, regular automated calibration procedures without the need of manual intervention may be found useful.

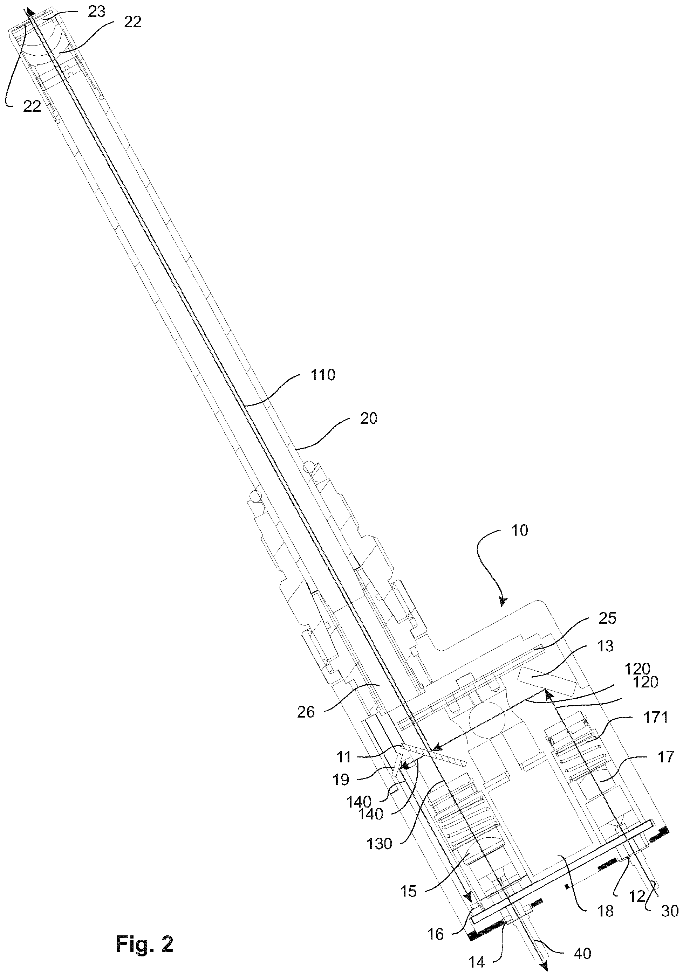

Figure 2 shows an exemplary embodiment of a probe head 10 which may be used in connection with Raman spectroscopy. A distally extending tube 20, which is, for instance, intended to reach into a containment in which a sample is located is mounted to probe head 10 in the presently shown exemplary embodiment,. A distal aperture 21 of tube 10 is thus provided at a distal end of tube 20. The tube 20 is mounted such that is surrounds the head aperture 26. An aperture optic 22, which is collimating optic is provided inside tube 20 adjacent distal aperture 21. Aperture optic 22 is suited to concentrate illuminating light from inside probe head 10 to a sample and also to collect scattered light from the sample over an extended solid angle. Distal window 23 and aperture optic 22 fluidly seal tube 20 at its distal end. Probe head 10 comprises dichroic mirror 11, which constitutes an optical path junction, as will become more apparent below. An optical fiber 30 is received inside a port 12 of probe head 10. Port 12, the emitter port, is intended to receive an emitter fiber, which guides light from a not shown light source and emits said light into probe head 10. Said emitted light is collimated by collimating optic 17 and travels along a first branch of emitter optical path 120 to mirror 13, where it is deflected and travels further along a second branch of emitter optical path 120 to optical path junction 11. From optical path junction 11, the light travelling along emitter optical path 120 to optical path junction 11 is partially deflected and guided distally, i.e. towards distal aperture 21, along sensing light optical path 110. Light travelling in a proximal direction, i.e., in a direction generally from distal aperture 21, along sensing light optical path 110 is received at optical path junction 11 and is partially guided along receiver optical path 130 to receiver optical fiber 40, which is received in port 14, the receiver port, of probe head 10. Along receiver optical path 130, the light is coupled into an end of receiver optical fiber 40 by coupling optic 15. Coupling optic 15 and collimating optic 17, in the present embodiments, are single lenses. While emitter path collimating optic 17 is configured for collimating monochromatic light or light having a very narrow spectral width of some nm only, receiver path coupling optic 15 may advantageously be chromatically corrected, as it is intended to couple light having a spectral bandwidth which may include up to several 100nm in embodiments. Coil springs 151 and 171 hold the collimating and coupling optics 15 and 17 in place.

The light travelling in a proximal direction along sensing light optical path 110 includes light scattered from a target provided distal of optical path junction 11 and induced by illumination light guided from optical path junction 11 distally along sensing light optical path 110, which in turn originates from light emitted from emitter optical fiber 30 and travelling along emitter optical path 120 to optical path junction 11. Receiver optical fiber 40 is intended to guide the light travelling proximally along receiver optical path 130 from optical path junction 11 to an end of receiver optical fiber 40 and to at least one sensor. Said at least one sensor may comprise a spectrometer suited to analyze a useful spectral bandwidth of a Raman spectrum.

At optical path junction 11, further light travelling towards optical path junction 11, which is provided as a dichroic mirror, is guided along reference optical path 140 via mirror 19 to reference sensor 16. Reference sensor 16 provides a reference intensity proportional to the intensity of the light illuminating the target from which the Raman scattered light originates, simultaneous with the sensing of said scattered light. Intensity fluctuations of the scattered light which are caused by intensity fluctuations of the illuminating light can thus be corrected for on the basis of the intensity fluctuations detected by reference sensor 16.

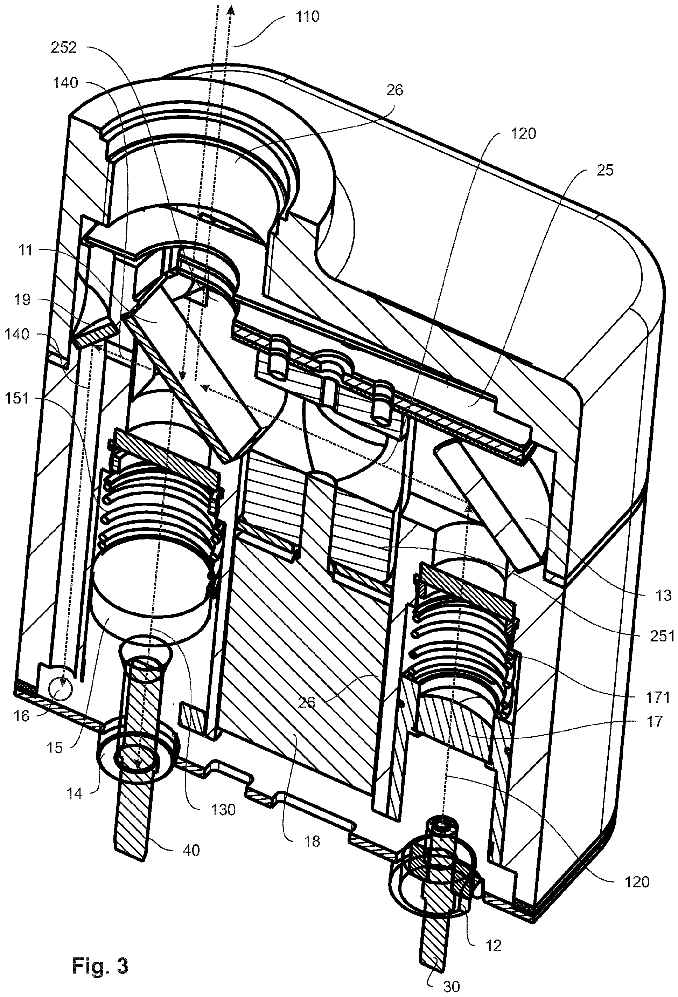

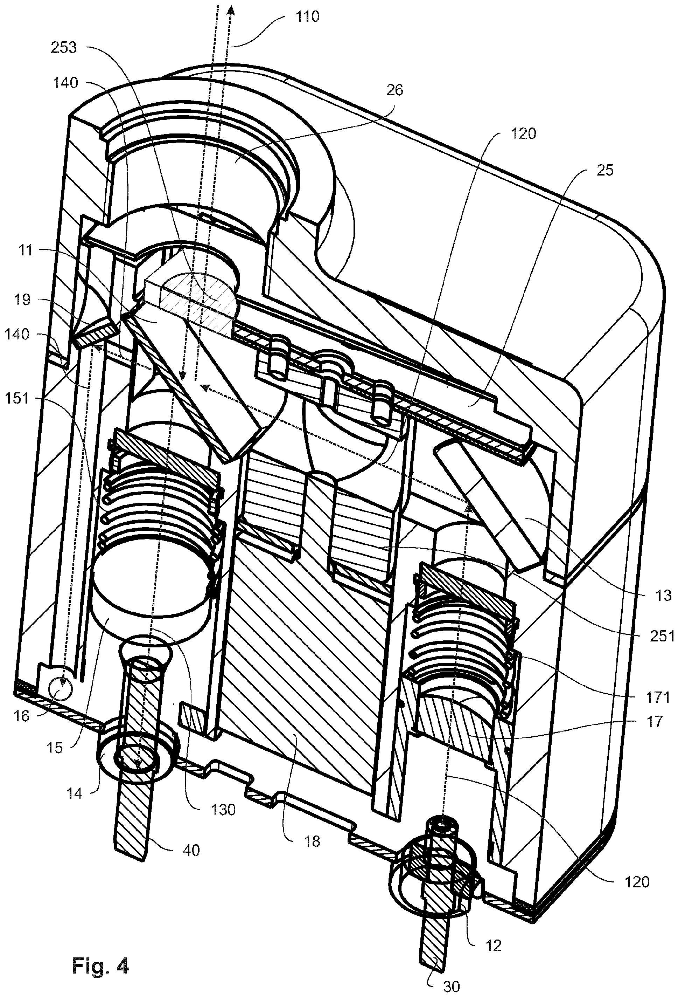

A reference target selector 25 is further provided in probe head 10. As outlined below in connection with figures 3 and 4, reference target selector 25 is configured to selectively place a reference target into sensing light optical path 110 between optical path junction 11 and distal aperture 21 and selectively provide free optical transmission between optical path junction 11 and distal aperture 21. As the skilled person readily appreciates, when free optical transmission between optical path junction 11 and distal aperture 21 is provided, light travelling in proximal direction to optical path junction 11, and hence a Raman spectrum detected by a spectral analyzer functionally connected to receiver optical fiber 40, results from a sample which is placed distal from distal aperture 21. When a reference target is placed into sensing light optical path 110 between optical path junction 11 and distal aperture 21, light travelling in proximal direction to optical path junction 11, and hence a Raman spectrum detected by a spectral analyzer functionally connected to receiver optical fiber 40, results from the reference target. Reference target selector 25, in the exemplary shown embodiment, is a disk which is driven by a motor 18.

Referring to figure 3, details of reference target selector 25 are illustrated in more detail. Reference target selector 25 is connected to motor 18 by axle 251. As can be seen, axle 251 has transverse holes so as to allow emitter optical path 120 to pass through axle 251 in at least some circumferential orientations of axle 251 and reference target selector 25. Reference target selector 25 comprises an open orifice 252, which is shown to be placed in registry with sensing light optical path 110 in figure 3, and which allows light to freely travel distally and proximally between optical path junction 11 and head aperture 26. With reference to figure 4, reference target selector 25 has been rotated by motor 18. Reference target 253 is placed in sensing light optical path 110 between optical path junction 11 and head aperture 26 and distal from optical path junction 11. Thus, when orifice 252 is in registry with sensing light optical path 110, as shown in figure 3, a Raman spectrum detected by a spectrometer functionally connected to receiver optical fiber 40 is the Raman spectrum of a sample which is located distal of distal aperture 21 of a tube 20 connected to the probe head 10 (cf. figure 2). When a reference target, such as reference target 253 shown in figure 4, is placed in sensing light optical path 110 between optical path junction 11 and the head aperture 26 and distal from optical path junction 11, a Raman spectrum detected by a spectrometer functionally connected to receiver optical fiber 40 is the Raman spectrum of the material of the reference target. A reference target may consist of or comprise a material having a well-known Raman spectrum. Thus, a reference Raman spectrum taken from a reference target may be used to evaluate Raman spectroscopy measurements of an unknown material. The position of spectral maxima and relative intensities at these spectral maxima obtained with the unknown sample may be compared to the position of spectral maxima and relative intensities at these spectral maxima obtained with the reference target. The instrument may be calibrated by e.g. assigning the CCD pixels to Raman shifts and considering the spectral response of the CCD array. Such calibration or evaluation methods are abundantly known to a person having skill in the art. Reference target selector 25 may comprise two or more reference targets having different Raman spectra. For one instance, one reference target may yield a Raman spectrum with narrow spectral maxima which may moreover be distributed over a wide range of Raman shifts. This specific reference target is particularly suited for performing a wavelength or Raman shift calibration, e.g., to assign a specific Raman shift to a CCD pixel. The wavelength or Raman shift calibration may be performed by comparing an expected spectrum of the known reference target to the measured spectrum and assigning certain wavelengths or Raman shifts to a specific measured data, which allows identifying wavelengths or Raman shifts in the data obtained by subsequent measurements. A second reference target may yield comparatively broad spectral lines, which makes it particularly suitable to e.g. calibrate the spectral response of a CCD array, i.e. comparing an expected intensity distribution to a measured intensity distribution, which may for instance provide an intensity correction factor for each wavelength of Raman shift and allows correction of subsequently obtained measurement values for the spectral response. Essentially, any number of reference targets may be provided by reference target selector. However, it is important that, in an embodiment as shown, the emitter optical path is not blocked by the drive of the reference target selector.

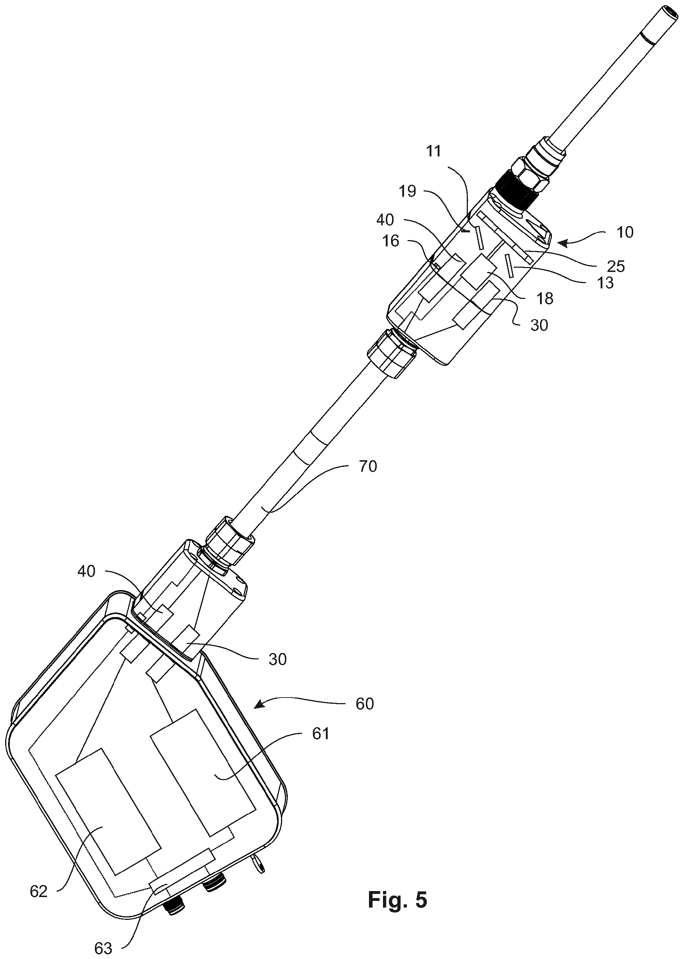

Figure 5 shows an embodiment of a Raman spectroscopy instrument which employs a probe head 10 of the type discussed above, and an emitter/analyzer unit 60 functionally coupled to probe head 10 by flexible fiber optic connector 70 such that monochromatic or small band light source 61 is configured to couple light into fiber optic connector 70 and said light is emitted to emitter optical path 120 of probe head 10 from emitter optical fiber 30 and light coupled into receiver optical fiber 40 from receiver optical path 130 and guided to an analyzer instrument comprises in emitter/analyzer unit 60, such as for instance spectrometer 62. The emitter/analyzer unit 60 comprises further a control 63 which is suitable to receive the measurements from both, the spectrometer 62 and the reference sensor 16 and which is preferably equipped to control the reference target selector 25. Thereby the control 63 can assign the measurement results to being calibration measurements or sample measurements and apply the corrections to compensate for the intensity fluctuations detected by the reference sensor 16 as well as apply the desired calibrations. In another embodiment, the control does not apply any corrections but simply prepares the collected data for transmission to an external data recorder. The fiber optic connector 70 comprises, besides the optical fibres, data and power transmission lines to control and power the reference target selector 25 as well as the reference sensor 16.

In other embodiments, emitter/analyzer unit 60 may be directly mounted and functionally coupled to probe head 10. Fiber optics may in more specific embodiments be completely omitted, and light source 61 may directly couple into emitter optical path 120 and receiver optical path may directly couple into spectrometer 62. However, probe head 10 together with the light source and the analyzer instrument need to be integrally handled, which may sum up to a considerable weight, and an integral unit may be integrated into a measurement setup in a less versatile manner than only a probe head to which the light source and the analyzer instrument are functionally coupled by a fiber optic connector.

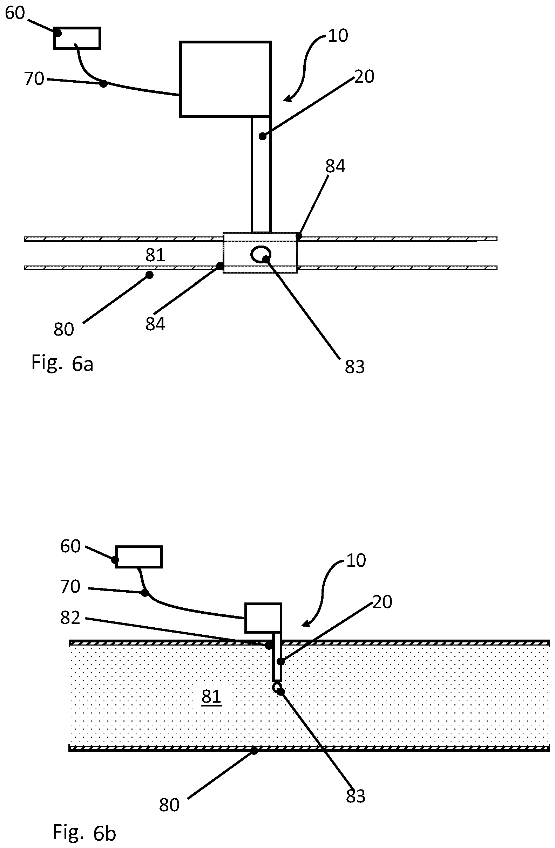

Exemplary measurement setups are illustrated in figures 6a and 6b. In Material inside a fluid 81 flowing inside a line 80 might be desired to be characterized by Raman spectroscopy. In Figure 6a, tube 20 of the probe forms part of the line 80 and comprises two ports 84 to which the line 80 is connected. In Figure 6b, tube 20 of probe head 10 extends through a port 82 in the walls of line 80. The measurement setup defines a sample volume 83 distal from tube 20 inside fluid 81, in which material may be characterized by Raman scattering applying the exemplary measurement setup. Fiber optic connector 70 functionally connects probe head 10 to emitter/analyzer unit 60. It may be intended to perform the Raman spectroscopy over an extended period of time, which may include hours or days. During this extended measurement period, it may be desired to calibrate the Raman spectroscopy instrument or take reference or calibration readings in regular intervals. With the herein suggested probe head, the entire calibration procedure may be performed internally in the probe head and without manual intervention. The probe head can remain installed, which eliminates the risk of contaminating fluid 81. Calibration or reference values may be interpolated between two consecutive calibration steps and/or reference readings, wherein interpolation may be linear or of higher order. A calibration or reference value may also be applied to all subsequent measurement readings until the next calibration or reference step is performed or to all previous measurement readings since the preceding calibration or reference step. The skilled person is familiar with abundant methods of interpolating calibration values. Moreover, if a reference of the intensity of the illumination light is continuously and simultaneous taken, fluctuations of the illumination intensity may also continuously be accounted for. Precision of Raman spectroscopy measurements is thus largely improved, in particular when Raman spectroscopy is applied for long-term continuous measurements, such as for process control.

While the subject matter of the disclosure has been explained by means of exemplary embodiments, it is understood that these are in no way intended to limit the scope of the claimed invention. It will be appreciated that the claims cover embodiments not explicitly shown or disclosed herein, and embodiments deviating from those disclosed in the exemplary modes of carrying out the teaching of the present disclosure will still be covered by the claims.

### Reference signs list

- 10: Probe head
- 11: Optical path junction
- 12: Port
- 13: Mirror
- 14: Port
- 15: Coupling optic
- 16: Reference sensor
- 17: Collimating optic
- 18: Motor
- 19: Reference Mirror
- 20: Tube, distally extending tube
- 21: Distal aperture
- 22: aperture optic
- 23: Distal window
- 25: Reference target selector
- 26: Head aperture
- 30: Optical fiber, emitter optical fiber
- 40: Optical fiber, receiver optical fiber
- 60: Emitter/analyzer unit
- 61: Light source
- 62: Spectrometer
- 63: control
- 70: Fiber optic connector
- 80: Line
- 81: Fluid
- 82: Port
- 83: Sample volume
- 110: Sensing light optical path
- 120: Emitter optical path
- 130: Receiver optical path
- 140: Reference optical path
- 151: Coil spring
- 171: Coil spring
- 251: Axle of reference target selector
- 252: Open orifice
- 253: Reference target

## Claims

1. A probe head (10), the probe head comprising
a sensing light optical path (110) extending between a head aperture (26) of the probe head and an optical path junction (11),
wherein the optical path junction (11) is configured
to receive light from an emitter optical path (120) and
to guide light traveling along the emitter optical path (120) and to the optical path junction at least partially along the sensing light optical path (110) into a distal direction and towards the head aperture (26),
and the optical path junction (11) is further configured
to guide collimated light traveling along the sensing light optical path (110) from the head aperture (26) and to the optical path junction (11) at least partially along a receiver optical path (130),
the probe head further comprising
a reference target selector (25), wherein the reference target selector comprises at least one reference target (253) and
wherein the reference target selector is configured to selectively place one of the at least one reference target (253) into the sensing light optical path (110) and selectively provide free optical transmission between the optical path junction (11) and the head aperture (26) and
wherein the probe head comprises further a reference sensor (16), wherein the probe head is configured such that part of the light travelling along the emitter optical path (120) is guided onto the reference sensor (16).

2. The probe head according to the preceding claim, wherein the optical path junction (11) comprises at least one of a beam splitter and a semi-transparent mirror, preferably a dichroic mirror, and wherein the emitter optical path (120) adjacent the optical path junction and the receiver optical path (130) adjacent the optical path junction are non-parallel.

3. The probe head according to any one of the preceding claims, wherein light traveling along the emitter optical path (120) adjacent the optical path junction (11) is partially deflected at optical path junction (11) to continue traveling along the sensing light optical path (110) and partially transmits the optical path junction (11) to be guided onto the reference sensor (16) along a reference optical path (140), in particular by a reference mirror (19)

4. The probe head according to any one of the preceding claims, wherein the head aperture (26), the optical path junction (11) and the receiver optical path (130) are arranged on a straight line, such that collimated light traveling along the sensing light optical path (110) towards the optical path junction (11) can transmit said optical path junction (11) without deflection to enter the receiver optical path (130),
and wherein the probe head comprises preferably, a mirror (13) which is provided in the emitter optical path (120) to deflect light traveling along the emitter optical path (120) on the optical path junction (11).

5. The probe head according to any preceding claim, wherein the probe head comprises at least one of an emitter port (12) or a receiver port (14), configured to receive an optical fiber,
wherein the emitter port (12) is arranged and configured such that the emitter optical path (120) extend through it and wherein a collimating optic (17) is arranged in the emitter optical path (120), suitable to produce collimated light from the light leaving an optical fibre connected to the emitter port (12) and/or
wherein the receiver port (14) is arranged and configured such that the receiver optical path (130) extend through it, and wherein a coupling optic (15) is arranged in the receiver optical path (130), suitable to couple collimated light into an optical fibre connected to the receiver port (14).

6. The probe head according to any one of the preceding claims, comprising an emitter port (12), a receiver port (14) and the reference sensor (16) which are arranged such that at least the section of the emitter optical path (120) adjacent the emitter port (12), the section of the receiver optical path (130) adjacent the receiver port (14) and the section of the reference optical path (140) adjacent the reference senor (16) are parallel to each other and wherein said sections of the optical paths (120, 130, 140) are preferably at least partially separated from each other by opaque walls.

7. A probe comprising
a probe head (10) according to any preceding claim and
a tube (20), comprising a proximal end and a distal aperture (21),
wherein the tube is mounted with its proximal end to the probe head (10),
wherein the mounted tube surrounds the head aperture (26) of the probe head (10), and extends the sensing light optical path (110) and
whereby the tube comprises preferably an aperture optic (22) wherein the aperture optic (22) is arranged in the tube (20) in the sensing light optical path (110), in particular adjacent the distal aperture (21) and wherein the aperture optic (22) is adapted to focus light traveling through the tube in a proximal- distal direction and to collimate light entering the tube (20) through the distal aperture (21) and traveling in a distal-proximal direction.

8. A Raman spectroscopy instrument, the Raman spectroscopy instrument comprising a probe head (10) according to any preceding claim, preferably a probe according to claim 8, a light source (61) and a spectrometer (62), wherein the emitter optical path (120) is configured for guiding light from the light source (61) to the optical path junction (11) and the optical path junction (11) is arranged and configured to guide said light at least partially along the sensing light optical path (110) into a distal direction, and wherein further the optical path junction (11) is arranged and configured to guide light travelling in a proximal direction along the sensing light optical path (110) at least partially along the receiver optical path (130) and to the spectrometer (62).

9. The Raman spectroscopy instrument according to the preceding claim, wherein the Raman spectroscopy instrument further comprises a fiber optic connector (70) connecting the spectrometer (62) with the probe head (10) and comprising at least two optical fibres, a data transmission channel and preferably means for electrical power transmission.

10. A method for performing optical measurements,
comprising a basic method comprising the steps of:
• emitting light and
• at least partially guiding said light into a proximal-distal direction of a sensing light optical pathway (110) and
• monitoring the intensity of the light guided into the proximal-distal direction of the sensing light optical pathway, by measuring a reference intensity which is proportional to the intensity of the emitted light,
• at least partially guiding light returning along the sensing light optical pathway (110) in a distal-proximal direction to at least one sensor and
• measuring at least one intensity of the returning light,
• correcting the measured intensity of the returning light by taking the reference intensity into account which was monitored in the time frame of relevance for said measured intensity, resulting in a corrected intensity,
the method for performing optical measurements further comprising the steps of
• performing the basic method in at least one measurement step in which the light is directed in the proximal-distal direction to a sample (83) such that the light returning in the distal-proximal direction originates from the sample, and
• performing the basic method in at least one reference step in which a reference target (253) is placed in the sensing light optical pathway (110) proximal from the sample such that the light returning along the sensing light optical pathway in the distal-proximal direction originates from the reference target (253),
wherein the at least one corrected intensity of the returning light measured by the at least one sensor during the at least one reference step is used in evaluating data from the at least one corrected intensity of the returning light measured by the at least one sensor during at least one of the at least one measurement step.

11. The method according to the preceding method claim, wherein
the light emitted is monochromatic light or narrow band light having a full width at half maximum of 10 nm or less and
wherein the at least one intensity of the returning light measured by the at least one sensor comprises a spectral intensity distribution of the returning light in a continuous spectral range covering a spectral range corresponding to at least 10% of the wavelength of the monochromatic emitted light or at least 10% of the wavelength of maximum intensity of the narrow band emitted light.

12. The method according to any preceding method claim, wherein the emitted light is monochromatic light or narrow band light having a full width at half maximum of 10 nm or less and wherein a Raman spectrum including at least one of Stokes Raman scattering and/or Anti-Stokes Raman scattering is measured.

13. The method according to any preceding method claim, wherein the sensing light optical pathway (110) is directed towards a sample (83), wherein the optical measurements are performed over a measurement period, wherein the method comprises performing at least two measurement steps during the measurement period, wherein at least one reference step is performed between the at least two measurement steps and wherein the position of the sensing light optical pathway (110) in relation to the sample (83) is maintained unchanged during the entire measurement period.

14. The method according to the preceding claim, wherein the sensing light optical pathway (110) comprises a sensing light optical path of a probe head (10), wherein the position of the probe head (10) in relation to the sample (83) is maintained unchanged during the entire measurement period.

15. The method according to the preceding claim, wherein the sample is provided within a containment (80), preferably a bioreactor or a line (80), and a tube (20) mounted to the probe head (10), inside which the sensing light optical path (110) extends,
wherein either the tube (20) reaches into the interior of the containment (80) through a port (82), wherein the tube (20) of the probe head remains fixedly installed through the port (82) during the measurement period
or the tube (20) forms itself part of the containment (80) comprising ports (82) onto which other parts of the containment (80) remain fixedly installed to during the measurement period.
